# FASCICULE DE BREVET EUROPEEN

(11) **EP 3 237 858 B1**
(45) Date de publication et mention de la délivrance du brevet: **01.05.2019**
(21) Numéro de dépôt: 15817341.9
(22) Date de dépôt: 22.12.2015
(51) Int. Cl.: G01J 3/42, G01N 21/63, G02B 21/24, G02B 26/06

(54) **PROCEDE DE RE-FOCALISATION D'UN MONTAGE OPTIQUE**
VERFAHREN ZUR REFOKUSSIERUNG EINER OPTISCHEN ANORDNUNG
METHOD FOR REFOCUSING AN OPTICAL ASSEMBLY

(30) Priorité: 23.12.2014 FR 1463250
(43) Date de publication de la demande: 01.11.2017
(73) Titulaire: Centre National de la Recherche Scientifique, 75016 Paris (FR); Université des Sciences et Technologies de Lille 1, 59655 Villeneuve d'Ascq (FR); ISEN, 59800 Lille (FR)
(72) Inventeur: DEVOS, Arnaud, 59320 Ennetieres en Weppes (FR)
(74) Mandataire: Nony
(86) Numéro de dépôt international: PCT/EP2015/080932
(87) Numéro de publication internationale: WO 2016/102540

(56) Documents cités:
- WO-A1-2005/124423
- FR-A1- 2 887 334
- FR-A1- 3 001 544
- US-A1- 2005 036 136

## Description

La présente invention concerne un procédé et un dispositif de re-focalisation d'un montage optique.

Certains montages optiques utilisant un faisceau provenant d'une source optique à impulsions ultra-courtes temporellement, c'est-à-dire de l'ordre de la femtoseconde ou de la picoseconde, sont utilisés dans l'usinage industriel, afin de pointer précisément l'endroit de la pièce à usiner.

Dans un montage optique dit « *résolu en temps* », notamment du type « *pompe-sonde* », on utilise des impulsions laser ultra-courtes temporellement pour exciter optiquement l'échantillon et détecter son état avant, pendant et après la création du phénomène. Il peut s'agir d'exciter des porteurs de charge dans un métal ou un semi-conducteur, d'apporter de la chaleur ou encore de générer des impulsions acoustiques.

Les montages pompe-sonde permettent d'étudier des phénomènes très rapides, par exemple la dynamique des électrons dans la matière, la diffusion de la chaleur à petite échelle ou encore des phénomènes de photo-acoustique ultra-rapide, aussi appelée « *acoustique picoseconde* ». Cette application de photo-acoustique est très répandue dans le monde industriel. La société Rudolph Technologies commercialise depuis de nombreuses années des équipements de contrôle en ligne de l'épaisseur des couches de circuits intégrés, très utilisés par tous les grands producteurs de micro-électronique. La société MENAPiC exploite une variante de la technique photo-acoustique, qui permet la caractérisation de matériaux.

Le principe de ces montages optiques est d'employer deux sources optiques, notamment laser, ou une source optique divisée en deux faisceaux. La première source optique, appelée « *pompe* », est responsable de la génération du phénomène. Le faisceau pompe est focalisé sur l'échantillon à travers une optique de focalisation dédiée, telle qu'une lentille ou un objectif de microscope par exemple. Le second faisceau, appelé « *sonde* », est également focalisé sur l'échantillon au même point, avec la même optique ou une optique différente.

Les deux faisceaux ont des trajets optiques différents mais l'un d'eux au moins est réglable en longueur de sorte qu'il existe un moyen de rendre rigoureusement égales les longueurs des chemins optiques parcourus par les deux faisceaux. Le réglage de la longueur d'un des trajets, par une ligne à retard, fixe le déphasage temporel entre les faisceaux pompe et sonde et détermine l'instant auquel on regarde l'état de l'échantillon.

Les deux faisceaux pompe et sonde se réfléchissent sur l'échantillon ou le traversent. Le faisceau sonde réfléchi ou transmis est analysé en amplitude, phase ou direction selon les montages. L'analyse des dépendances de l'une de ces grandeurs en fonction du délai entre les faisceaux pompe et sonde permet de reconstruire l'histoire de l'échantillon avant, pendant et après la création du phénomène.

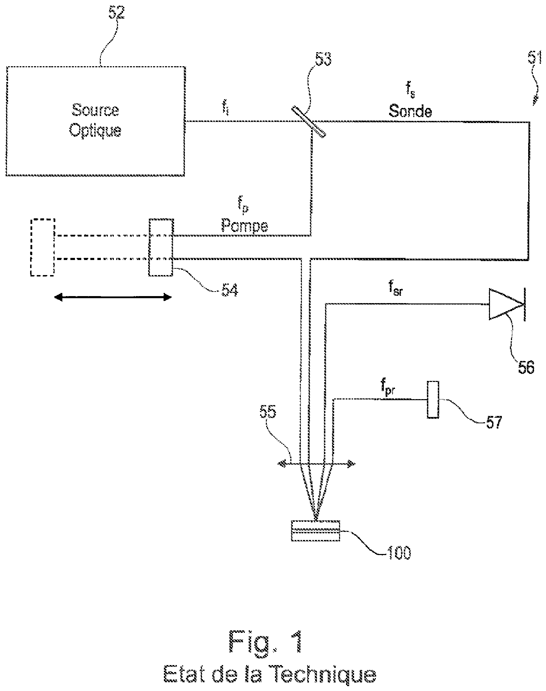

La figure 1 représente un exemple de montage optique pompe-sonde 51 employant une seule source laser 52. Le faisceau fᵢ issu de celle-ci est divisé en deux faisceaux, pompe fₚ et sonde fₛ, par un élément séparateur 53. Le retard entre ces faisceaux est réglable grâce à une ligne à retard 54, constituée dans cet exemple d'un miroir mobile selon un déplacement linéaire. Les deux faisceaux pompe fₚ et sonde fₛ sont ensuite recombinés sur l'échantillon à analyser 100 grâce à une optique de focalisation 55, unique pour les deux faisceaux dans l'exemple considéré. Le faisceau sonde réfléchi fsᵣ par l'échantillon 100 est analysé, dans cet exemple, en intensité grâce à une photodiode 56, le faisceau pompe fpᵣ étant stoppé par un piège de lumière 57.

L'ajustement précis de la distance entre l'optique de focalisation et la surface de l'échantillon à analyser est crucial pour obtenir le signal recherché, comme expliqué dans les articles de A. Devos et al. « Strong oscillations detected by picosecond ultrasonics in silicon: evidence for an electronic structure effect », Physical Review B, 70, 12, 125208, 2004, et « A différent way of performing picosecond ultrasonic measurements in thin transparent films based on laser-wavelength effects », Applied Physics Letters 86, 21, 211903, 2005.

A chaque changement d'échantillon ou de zone de l'échantillon analysée, en particulier pour un échantillon d'épaisseur variable, ce réglage doit être repris selon l'épaisseur locale et le type d'échantillon.

Dans des méthodes connues, la re-focalisation est effectuée en observant l'évolution du signal lorsque la distance focale varie, en cherchant à obtenir avec le nouvel échantillon une réponse comparable ou plus forte que celle de l'échantillon de référence. Toutefois, dans le cas d'un échantillon ayant une réponse plus faible, rien ne garantit que cette exploration suffise. Dans la pratique, lorsqu'il est nécessaire de modifier la superposition spatiale des faisceaux, ou les calibres des appareils électroniques de mesure, le signal est souvent perdu.

Une autre technique connue consiste à analyser la divergence du faisceau réfléchi sur l'échantillon. Toutefois, cette technique ne trouve à s'appliquer que pour les montages où la focalisation et la re-collimation des faisceaux est réalisée par la même optique. En regardant au loin le faisceau réfléchi, celui-ci doit apparaître collimaté quand l'échantillon est dans le plan focal de l'optique. Cette technique souffre souvent d'un manque de précision.

Dans d'autres méthodes connues, un système externe est utilisé, par exemple un système électronique comme décrit dans la demande de brevet CA 02281747. La méthode peut reposer sur une mesure de capacité, comme dans le produit Autofocus control module de la société American Laser Enterprises. La méthode peut encore reposer sur une mesure optique, à l'aide d'un système optique externe, comme dans le produit FocusTrac™ de la société Motion X corporation.

Les systèmes utilisant des mesures de capacité requièrent une surface d'échantillon métallique, ce qui exclut toutes sortes d'échantillon, comme les échantillons en verre par exemple
Les systèmes optiques externes imposent d'ajouter différentes optiques sur le trajet de la source laser, ce qui est dommageable pour la précision des mesures.

Il subsiste par conséquent un besoin pour améliorer encore les méthodes permettant de focaliser des faisceaux sur un support optiquement réfléchissant dans un montage optique, afin de remédier aux inconvénients ci-dessus.

L'invention a pour but de répondre à ce besoin et elle y parvient, selon l'un de ses aspects, grâce à un procédé de re-focalisation sur une surface cible d'un montage optique, utilisant au moins un faisceau provenant d'une source optique à impulsions courtes, comportant au moins une optique de focalisation du faisceau sur la surface cible, la re-focalisation étant opérée après connaissance de conditions de référence pour lesquelles le montage optique est considéré comme étant focalisé, procédé dans lequel :
- on détecte un signal de focalisation représentatif d'un recouvrement temporel des impulsions entre un faisceau réfléchi par la surface cible et un faisceau de référence non réfléchi par la surface cible et issu de la source, l'un des faisceaux étant retardé par une ligne à retard,
- on fait varier, à partir desdites conditions de référence, le chemin optique du faisceau sur lequel est placée la ligne à retard de façon à amener ledit signal de focalisation à atteindre ou dépasser un seuil prédéfini, et
- on réajuste la focalisation à partir de la connaissance de la variation de chemin optique entre les conditions de référence et les conditions pour lesquelles le signal de focalisation atteint ou dépasse ledit seuil prédéfini.

Le procédé selon l'invention peut être appliqué à l'analyse d'un échantillon définissant ladite surface cible, utilisant un faisceau sonde et un faisceau pompe, dont l'un au moins provient de la source optique à impulsions courtes, comportant au moins une ligne à retard placée sur le trajet de l'un des faisceaux, et au moins une optique de focalisation des faisceaux pompe et sonde sur l'échantillon à analyser, le signal de focalisation représentatif du recouvrement temporel des impulsions étant détecté entre un faisceau réfléchi par l'échantillon, retardé par la ligne à retard, et un faisceau de référence non réfléchi par l'échantillon.

L'invention porte encore, selon un autre de ses aspects, sur un dispositif de re-focalisation destiné à la mise en oeuvre du procédé selon l'invention ci-dessus, le montage optique utilisant au moins un faisceau provenant d'une source optique à impulsions courtes, comportant au moins une optique de focalisation du faisceau sur la surface cible, le dispositif comportant un moyen de détection d'un signal de focalisation représentatif d'un recouvrement temporel des impulsions entre un faisceau réfléchi par la surface cible, et un faisceau de référence non réfléchi par la surface cible et issu de la source, l'un des faisceaux étant retardé par une ligne à retard,
le dispositif étant configuré pour :
- faire varier, à partir de conditions de référence pour lesquelles le montage optique était considéré comme étant focalisé, le chemin optique du faisceau sur lequel est placée la ligne à retard de façon à amener ledit signal de focalisation à atteindre ou dépasser un seuil prédéfini, et
réajuster la focalisation à partir de la connaissance de la variation de chemin optique entre lesdites conditions de référence et celles pour lesquelles le signal de focalisation atteint ledit seuil prédéfini.

Le dispositif selon l'invention peut être appliqué à l'analyse d'un échantillon définissant ladite surface cible, auquel cas le montage optique d'analyse utilise avantageusement un faisceau sonde et un faisceau pompe, dont l'un au moins provient de la source optique à impulsions courtes, comporte au moins une ligne à retard placée sur le trajet de l'un des faisceaux, et au moins une optique de focalisation des faisceaux pompe et sonde sur l'échantillon à analyser, le signal de focalisation représentatif du recouvrement temporel des impulsions étant détecté entre un faisceau réfléchi par l'échantillon, retardé par la ligne à retard, et un faisceau de référence non réfléchi par l'échantillon.

L'invention permet, notamment dans des montages optiques du type pompe-sonde, de régler facilement la focalisation de faisceaux sur une surface cible, de façon très rapide, sans l'intervention d'un technicien ou l'utilisation de systèmes externes.

Le procédé selon l'invention permet de réajuster automatiquement la focalisation avec succès même pour des surfaces cibles définies par des échantillons d'une épaisseur différente d'environ 4 mm à celle de l'échantillon de référence.

L'invention peut utiliser le faisceau pompe réfléchi sur la surface où il faut faire la mise au point, signal habituellement perdu dans ce type de montage. La précision de la focalisation est excellente car la résolution temporelle est celle du montage pompe-sonde. L'invention permet ainsi de déterminer indépendamment de la réponse de l'échantillon la nouvelle position à donner à la ou aux optiques de focalisation.

L'invention peut être mise en oeuvre à l'aide d'optiques indépendantes du montage optique d'analyse, ce qui évite de perturber ce dernier, et d'un moyen permettant de réaliser une corrélation croisée, mais ne requiert pas l'ajout de systèmes optiques complexes étrangers au montage. Il en résulte un dispositif très compact.

L'invention vise tous les équipements implémentant un montage optique de type pompe-sonde, par exemple des montages de thermoréflectance, d'acoustique picoseconde ou térahertz. Elle est particulièrement adaptée aux mesures optiques rapides et aux systèmes d'analyse acoustique, par exemple pour des mesures d'épaisseur, de temps de vie de porteurs dans des semi-conducteurs, ou de propriétés élastiques de matériaux, notamment pour des applications sonar.

L'invention est également adaptée à des montages optiques mono-faisceau, notamment dans des applications d'usinage, car permettant de fournir une focalisation très précise.

On peut faire varier, à partir desdites conditions de référence, le chemin optique du faisceau sur lequel est placée la ligne à retard en déplaçant la ligne à retard par rapport à la surface cible, ce qui donne un résultat de focalisation optimal. Dans une variante, on fait varier le chemin optique du faisceau sur lequel est placée la ligne à retard en déplaçant la surface cible par rapport à la ligne à retard, notamment grâce à un porte-échantillon mobile sur lequel la surface cible est disposée.

La ligne à retard est de préférence placée sur le chemin du faisceau de référence non réfléchi par la surface cible. Ce chemin étant naturellement plus court et le dispositif requérant l'égalité des trajets optiques, il est avantageux de mettre la ligne à retard sur ce chemin car elle allonge inévitablement le trajet optique. Dans une variante, la ligne à retard est placée sur le chemin du faisceau réfléchi par la surface cible.

La ligne à retard et/ou la surface cible sont ainsi avantageusement déplacés afin de réaliser diverses détections du signal de focalisation, jusqu'à ce ledit signal de focalisation atteigne ou dépasse le seuil prédéfini.

Ce seuil prédéfini peut être égal à zéro, mieux est strictement supérieur à zéro. Le seuil prédéfini peut dépendre de la largeur des impulsions, un seuil égal à zéro pouvant ne pas être suffisant pour réaliser facilement la re-focalisation, notamment pour des impulsions de l'ordre de la picoseconde. Ce seuil prédéfini peut être fonction de la longueur d'onde de la ou des sources optiques.

Le signal de focalisation représentatif du recouvrement temporel des impulsions peut être obtenu par corrélation croisée entre le faisceau réfléchi par la surface cible, retardé par la ligne à retard, et le faisceau de référence non réfléchi par la surface cible et issu de la ou de l'une des sources.

La corrélation croisée, ou autocorrélation, entre des impulsions optiques, notamment laser, a été décrite dans l'article de Chong et al. « Autocorrélation measurement of femtosecond laser pulses based on two-photon absorption in GaP photodiode », Applied Physics Letter volume 105, page 062111, 2014.

Le procédé de focalisation selon l'invention peut être mis en oeuvre à l'aide d'une boucle d'asservissement, ce qui permet notamment d'analyser un échantillon dans son entier de manière totalement automatique. La boucle d'asservissement peut être programmée pour effectuer les différentes étapes du procédé de re-focalisation selon l'invention ainsi que l'analyse de l'état de l'échantillon, à chaque changement des conditions d'analyse, notamment en cas de changement d'échantillon ou de changement de zone d'observation.

Le montage optique dans lequel est mis en oeuvre le procédé selon l'invention peut comporter un élément séparateur pour séparer le faisceau provenant de la source optique afin de créer le faisceau réfléchi par la surface cible et le faisceau de référence non réfléchi par la surface cible.

Dans une variante, le montage optique d'analyse comporte une unique source optique et un élément séparateur pour séparer le faisceau provenant de la source optique afin de créer les faisceaux pompe et sonde. Dans une variante encore, le montage optique d'analyse comporte deux sources optiques, émettant respectivement les faisceaux pompe et sonde. Dans le cas où le montage optique d'analyse comporte deux sources optiques distinctes, celles-ci peuvent être synchronisées en utilisant des électroniques dédiées.

La ligne à retard est avantageusement placée sur le trajet du faisceau pompe.

Le faisceau de référence non réfléchi par l'échantillon peut être le faisceau pompe non retardé par la ligne à retard, ou le faisceau sonde ou, dans le cas où le montage optique d'analyse comporte une seule source et un élément séparateur, un faisceau issu de la source optique capturé avant l'élément séparateur.

L'utilisation du faisceau pompe non retardé par la ligne à retard est préférée, car cela permet d'obtenir des impulsions plus énergétiques, le faisceau ne parcourant pas, sur son trajet, des optiques susceptibles de le modifier.

Le montage optique d'analyse dans lequel est mis en oeuvre le procédé selon l'invention comporte avantageusement une seule optique de focalisation permettant aux deux faisceaux pompe et sonde d'être recombinés sur l'échantillon. Dans une variante, le montage optique d'analyse comporte une optique de focalisation différente pour chaque faisceau pompe et sonde.

La focalisation peut être réajustée en déplaçant la ou les optiques de focalisation par rapport à la surface cible. Dans une variante, la focalisation est modifiée en déplaçant la surface cible par rapport à la ou aux optiques de focalisation, notamment grâce au déplacement du porte-échantillon sur lequel la surface cible est disposée.

Lors de la mise en oeuvre du procédé selon l'invention, lorsque la focalisation peut être rétablie, et dans le cas où la ligne à retard a été déplacée pour faire varier le chemin optique du faisceau sur lequel cette dernière est placée, la ligne à retard est de préférence replacée au zéro de référence pour obtenir le signal et débuter par exemple l'analyse de l'échantillon ou l'usinage.

Les conditions de référence correspondent avantageusement à l'état dans lequel la ou les optiques de focalisation sont considérées comme étant focalisées sur une surface cible de référence, et peuvent correspondre à une longueur de référence d₁ du chemin optique entre la ligne à retard et la surface cible.

La détermination de cette longueur de référence d₁ peut être réalisée de façon conventionnelle avec une surface cible de référence autre que celle à utiliser, ou avec la surface cible mais lors de l'observation d'une zone de référence autre que la zone de la surface cible devant être utilisée, par exemple à la surface de l'échantillon ou à une profondeur plus ou moins grande dans son épaisseur dans le cas de l'analyse d'un échantillon.

Selon un mode de réalisation préféré de l'invention, on détermine la longueur d₂ du chemin optique entre la ligne à retard et la surface cible, pour laquelle le signal de focalisation atteint ou dépasse le seuil prédéfini. Il suffit alors de réajuster la focalisation en déplaçant l'optique de focalisation ou la surface cible d'une valeur dépendant de préférence de d₂-d₁, mais pouvant être régie par une relation autre entre d₂ et d₁.

Ainsi, dans le cas où le montage optique est configuré pour que le faisceau passe à plusieurs reprises par la ou les lignes à retard, le réajustement est un multiple de cette valeur d₂-d₁, à savoir par exemple 2k (d₂-d₁), où k est le nombre de passages aller et retour.

Le décalage maximal en valeur absolue concernant la position de la surface cible, permis par le montage optique d'analyse, vaut d, étant par exemple compris entre 0 et 25 mm. La ligne à retard ne peut être éloignée de la surface cible d'une valeur supérieure à d₁+d ou inférieure à d₁-d. Ce déplacement de la ligne à retard peut correspondre à un retard négatif ou positif, c'est-à-dire à un retard ou à une avance.

La recherche du signal de focalisation par corrélation croisée s'effectue alors avantageusement à partir de la valeur d₁-d, en incrémentant progressivement la longueur de chemin optique.

Le procédé selon l'invention est particulièrement adapté à des échantillons comportant un empilement de couches minces, notamment métalliques, sur un substrat, notamment en silicium. Les échantillons comportent par exemple une couche d'aluminium, notamment d'épaisseur égale à 10 nm, une couche de nitrure de silicium, notamment d'épaisseur égale à 200 nm, et une couche de silicium, étant de composition Al/SiN/Si.

Dans le cas d'un échantillon à analyser, la focalisation peut se faire à la surface de l'échantillon ou en profondeur, à une distance prédéfinie de sa surface.

La source optique est avantageusement un laser à impulsions courtes, notamment comprises entre 10 fs et 10 ps. Les lasers utilisés sont par exemple le modèle Chameleon Ultra ou le modèle MIRA de la société Coherent, ou le modèle Mai Tai de la société Spectra Physics.

Ces lasers délivrent avantageusement des impulsions d'environ 100 fs de durée, accordables à des longueurs d'onde comprises entre 680 nm et 1050 nm, correspondant au proche infrarouge. Dans le cas d'une seule source optique, un doubleur de fréquence, disposé, le cas échéant, avant ou après l'élément séparateur pompe/sonde, peut être utilisé afin de délivrer par exemple des impulsions accordables à des longueurs d'onde comprises entre 350 nm et 520 nm, correspondant au bleu, sans modifier la durée des impulsions.

La puissance moyenne de la ou des sources optiques peut être comprise entre quelques mW à plus de 100 mW, une atténuation à l'entrée du montage optique pouvant être utilisée si nécessaire. Plus la source optique émet d'impulsions énergétiques, plus les mesures de corrélation croisée sont aisées à réaliser.

Le moyen de détection du signal de focalisation peut comporter un cristal non linéaire, qui procure une polarisation importante, notamment un cristal de beta borate de barium (BBO). Afin de détecter le signal de focalisation, les deux faisceaux sont combinés dans le cristal non linéaire, et le faisceau issu de la somme des photons issus de la corrélation croisée est détecté à l'aide d'une photodiode.

Dans une variante, le moyen de détection du signal de focalisation est une photodiode à deux photons sur laquelle on focalise les deux faisceaux, notamment une photodiode à deux photons en carbure de silicium (SiC), phospho-arséniure de gallium (GaAsP) ou phosphure de gallium (GaP). L'utilisation d'une photodiode à deux photons, notamment en carbure de silicium, est particulièrement avantageuse dans le cas d'applications utilisant des sources optiques de longueurs d'onde différentes, par exemple une longueur d'onde pour le faisceau pompe située dans le proche infrarouge, de longueur d'onde comprise entre 680 nm et 1050 nm environ, et celle du faisceau sonde située dans le bleu, de longueur d'onde comprise entre 350 nm et 520 nm environ.

La ligne à retard optique peut comporter un miroir et/ou un ou plusieurs prismes à réflexion totale et/ou un rétro-réflecteur et/ou un modulateur électro-optique, notamment portés par un chariot mobile. Le choix du type de ligne à retard dépend avantageusement de la longueur d'onde de la ou des sources optiques. Un microcontrôleur peut être présent dans le dispositif pour piloter les déplacements de la ligne à retard.

La ligne à retard optique peut être intégrée dans le moyen de détection dudit signal de focalisation. Cela permet d'avoir un dispositif compact à encombrement minimum, et de limiter les modifications d'un montage optique de focalisation connu, en ajoutant le moins d'éléments possibles.

Le cas échéant, la ligne à retard utilisée pour faire varier le chemin optique du faisceau optique sur lequel cette dernière est placée peut être la même que celle utilisée pour fixer le déphasage temporel entre les faisceaux pompe et sonde pour l'analyse de l'échantillon, de manière connue, comme décrit précédemment. Dans une variante, le dispositif selon l'invention comporte deux lignes à retard distinctes.

L'invention porte encore, selon un autre de ses aspects, sur un ensemble, encore appelé kit, destiné à la mise en oeuvre du procédé de re-focalisation selon l'invention, comprenant :
- le dispositif de re-focalisation selon l'invention, tel que défini ci-dessus, comportant au moins une ligne à retard et au moins une optique de focalisation de faisceaux sur la surface cible, et
- une surface cible de référence pour la détermination préalable des conditions de référence pour lesquelles le montage optique est considéré comme étant focalisé sur la surface cible de référence.

La surface cible de référence peut être définie par un échantillon de référence comportant une couche métallique, en aluminium notamment, et au moins une couche en un autre matériau, notamment du silicium ou du verre.

La surface cible de référence est de préférence observée sous incidence normale pour la détermination préalable desdites conditions de référence.

Les caractéristiques énoncées ci-dessus pour le procédé et le dispositif de focalisation s'appliquent audit ensemble.

L'invention pourra être mieux comprise à la lecture de la description détaillée qui va suivre, d'exemples de mise en oeuvre non limitatifs de celle-ci, et à l'examen du dessin annexé, sur lequel :
- la figure 1, déjà décrite, représente un montage optique pompe-sonde selon l'art antérieur,
- la figure 2 représente un dispositif selon l'invention pour la focalisation d'un montage optique,
- la figure 3 représente un dispositif selon l'invention pour la focalisation d'un montage optique pompe-sonde,
- la figure 4 représente le moyen de détection selon l'invention du dispositif de la figure 3,
- la figure 5 illustre des étapes dans la mise en oeuvre du procédé selon l'invention, et
- la figure 6 représente des chronogrammes de signaux obtenus en appliquant le procédé selon l'invention.

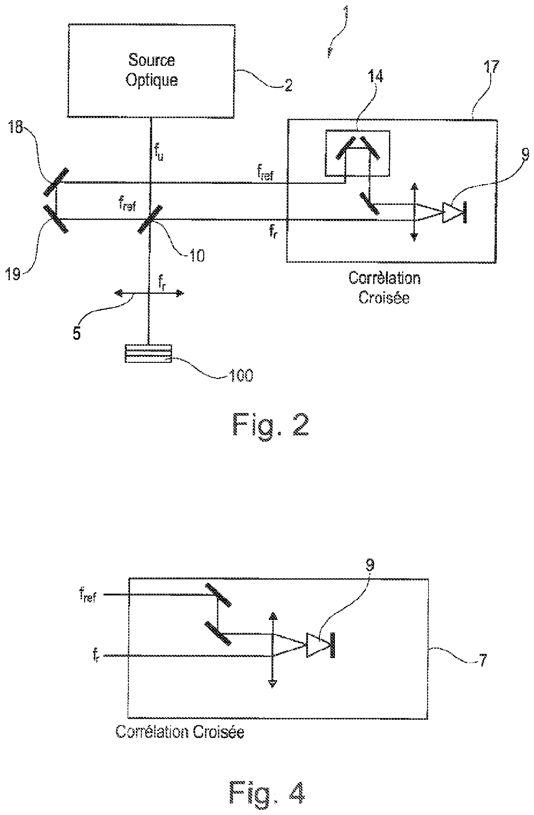

Un dispositif de focalisation 1 d'une surface cible 100 d'un montage optique, destiné à la mise en oeuvre du procédé de re-focalisation selon l'invention, est représenté à la figure 2.

Le montage optique utilise un faisceau fᵤ provenant d'une source optique 2. La source optique 2 est avantageusement un laser à impulsions courtes, par exemple de durée sensiblement égale à 100 fs, et accordable à des longueurs d'onde comprises entre 680 nm et 1050 nm, ce qui correspond au proche infrarouge.

Le montage optique comporte une optique de focalisation 5 du faisceau fᵤ sur la surface cible 100, et une ligne à retard 14, intégrée dans un moyen de détection 17 décrit dans la suite.

Préalablement à la mise en oeuvre du procédé de re-focalisation selon l'invention, une longueur de référence d₁ du chemin optique entre la ligne à retard 14 et la surface cible a été déterminée, dans des conditions de référence dans lesquelles l'optique de focalisation 5 est considérée comme étant focalisée sur une surface cible de référence.

La détermination préalable de la longueur de référence d₁ peut être réalisée avec une surface cible de référence autre que celle à utiliser, ou avec la surface cible 100 mais dans une zone de référence autre que celle devant être visée.

Un faisceau de référence f_{ref} non réfléchi par la surface cible 100 est obtenu par la disposition d'un élément séparateur 10 pour capturer une partie du faisceau fᵤ et l'envoyer vers un moyen de détection 17 d'un signal de focalisation, grâce à des miroirs 18 et 19. Le faisceau fᵣ réfléchi par la surface cible 100 et issu du faisceau fᵤ est également envoyé vers le moyen de détection 17 d'un signal de focalisation. Le faisceau de référence f_{ref} est retardé par la ligne à retard 14.

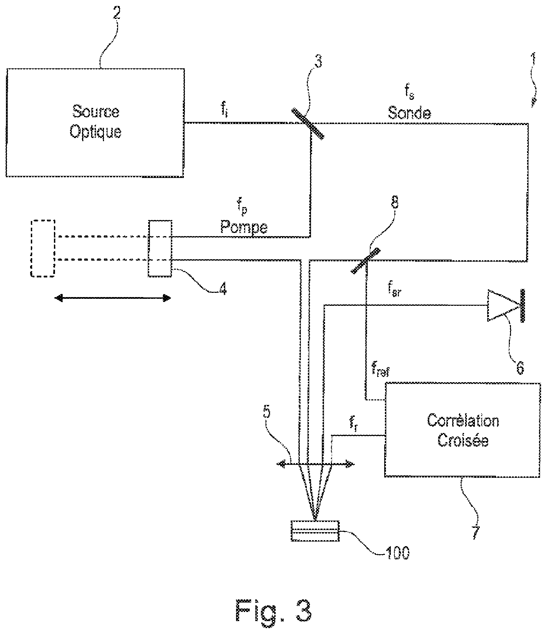

Un dispositif de focalisation 1 d'un montage optique d'analyse d'un échantillon 100 définissant une surface cible, destiné à la mise en oeuvre du procédé selon l'invention, est représenté à la figure 3.

L'échantillon 100 comporte par exemple une couche d'aluminium, d'épaisseur égale à 10 nm, une couche de nitrure de silicium, d'épaisseur égale à 200 nm, et une couche de silicium, étant de composition Al/SiN/Si. L'invention n'est toutefois pas limitée à un type d'échantillon à analyser particulier.

Le montage optique d'analyse utilise un faisceau pompe fₚ et un faisceau sonde fₛ provenant d'un faisceau initial fᵢ émis par une unique source optique 2 et séparé en deux faisceaux pompe et sonde par un élément séparateur 3. Dans une variante non illustrée, le montage optique d'analyse comporte deux sources optiques émettant respectivement les faisceaux pompe fₚ et sonde fₛ.

Un doubleur de fréquence, non représenté, peut être disposé après l'élément séparateur 3 afin de délivrer pour la sonde des impulsions accordables à des longueurs d'onde comprise entre 350 nm et 520 nm, correspondant au bleu, sans modifier la durée des impulsions. L'invention n'est toutefois pas limitée à un type particulier de source optique ni à des types particuliers de faisceaux pompe et sonde.

Le montage optique d'analyse comporte une ligne à retard 4 placée sur le trajet du faisceau pompe fₚ et une optique de focalisation 5 permettant aux deux faisceaux pompe fₚ et sonde fₛ d'être recombinés sur l'échantillon à analyser 100. Dans une variante non illustrée, le montage optique d'analyse comporte une optique de focalisation différente pour chaque faisceau pompe fₚ et sonde fₛ. La ou les optiques de focalisation 5 sont par exemple des lentilles de type AC254-50-B 50 mm ou Achro MG 60 mm.

Préalablement à la mise en oeuvre du procédé de re-focalisation selon l'invention, une longueur de référence d₁ du chemin optique entre la ligne à retard 4 et l'échantillon a été déterminée, dans des conditions de référence dans lesquelles l'optique de focalisation 5 est considérée comme étant focalisée sur un échantillon de référence.

La détermination préalable de la longueur de référence d₁ peut être réalisée avec un échantillon de référence autre que celui à analyser, ou avec l'échantillon à analyser 100 mais dans une zone de référence autre que celle devant être analysée.

Un faisceau sonde de référence f_{ref} non réfléchi par l'échantillon 100 est obtenu par la disposition d'un élément séparateur 8 pour capturer une partie du faisceau sonde et l'envoyer vers un moyen de détection 7 d'un signal de focalisation. Le faisceau sonde réfléchi fsᵣ par l'échantillon 100 est capturé, dans l'exemple décrit, par une photodiode 6.

Comme visible aux figures 2 et 4, le moyen de détection 7, 17 du signal de focalisation est avantageusement une photodiode à deux photons, par exemple en carbure de silicium (SiC), particulièrement avantageuse dans le cas d'un montage pompe-sonde, lorsque les longueurs d'onde des faisceaux pompe fₚ et sonde fₛ sont différentes.

Dans des variantes, le moyen de détection 7 du signal de focalisation est une photodiode à deux photons en phospho-arséniure de gallium (GaAsP) ou phosphure de gallium (GaP), ou comporte un cristal non linéaire, par exemple un cristal de beta borate de barium (BBO). L'invention n'est toutefois pas limitée à un type particulier de moyen de détection dudit signal de focalisation.

Dans les exemples décrits, la ligne à retard 4, 14 comporte un miroir porté par un chariot mobile. Dans des variantes, la ligne à retard 4, 14 comporte un ou plusieurs prismes à réflexion totale et/ou un rétro-réflecteur et/ou un modulateur électro-optique.

Un circuit électronique à microcontrôleur, non représenté, peut être présent pour piloter les déplacements des différents éléments mobiles du montage optique, notamment la ligne à retard 4, 14.

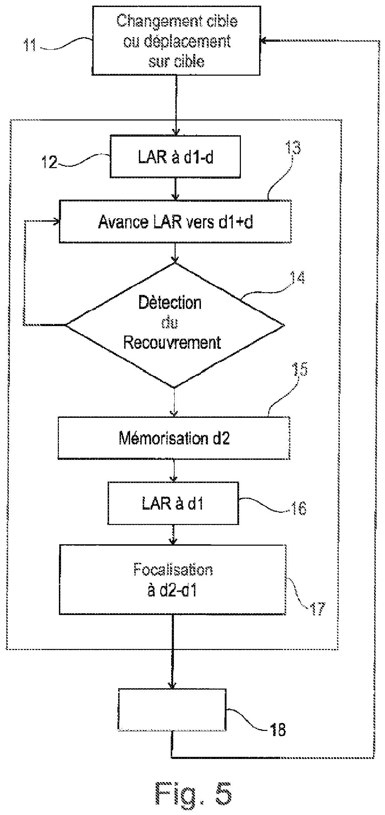

Le procédé de re-focalisation selon l'invention peut être mis en oeuvre de façon automatique à l'aide d'une boucle d'asservissement, dont un exemple est représenté à la figure 5.

Lors d'un changement de surface cible ou de changement de zone observée, changement matérialisé par l'étape 11 à la figure 5, une nouvelle focalisation du montage optique est nécessaire.

La ligne à retard 4, 14 est initialement placée à la valeur correspondante à d₁-d, à l'étape 12. La valeur d est le décalage maximal entre la ligne à retard 4, 14 et la surface cible 100 permis par le montage optique d'analyse, et d peut être comprise entre 0 et 25 mm. La ligne à retard 4, 14 est progressivement déplacée depuis la position correspondant au chemin optique d₁-d, lors d'une étape 13, afin d'augmenter le chemin optique du faisceau sur lequel la ligne à retard 4, 14 est placée.

A chaque incrément de déplacement, dans une étape 14, une détection du signal de focalisation représentatif d'un recouvrement temporel des impulsions entre le faisceau réfléchi fᵣ par l'échantillon 100, et le faisceau de référence f_{ref}, non réfléchi par l'échantillon 100, est réalisée. La longueur du chemin optique est incrémentée en déplaçant la ligne à retard jusqu'à détecter un signal de focalisation supérieur à un seuil prédéfini.

On mémorise, lors d'une étape 15, la longueur correspondante d₂. Dans une variante non illustrée, la surface cible 100 est déplacée par rapport à la ligne à retard 4, 14 afin de faire varier le chemin optique du faisceau, par exemple grâce à un porte-échantillon sur lequel la surface cible est disposée.

La détection du signal de focalisation se fait avantageusement, comme décrit plus haut, par la corrélation croisée entre le faisceau réfléchi fᵣ par l'échantillon 100, et le faisceau de référence f_{ref}, non réfléchi par l'échantillon 100.

Lors d'une étape 16, la ligne à retard 4, 14 est replacée au zéro de référence, qui correspond à la longueur de référence d₁ du chemin optique.

Lors d'une étape 17, on réajuste la focalisation en déplaçant l'optique de focalisation 5 d'une valeur d₂-d₁, de sorte que l'optique de focalisation soit à nouveau correctement focalisée sur la surface cible 100.

La focalisation peut être réajustée en déplaçant l'optique de focalisation 5 par rapport à la surface cible 100 de la valeur d₂-d₁. Dans une variante, la focalisation est réajustée en déplaçant la surface cible 100 par rapport à l'optique de focalisation 5, par exemple en déplaçant le porte-échantillon sur lequel la surface cible est disposée, l'optique de focalisation 5 restant fixe.

Dans le cas où le montage optique est configuré pour qu'un des faisceaux passe à plusieurs reprises par la ligne à retard 4, 14, la valeur de réajustement de la focalisation dépend du nombre de passages aller et retour.

L'analyse de l'échantillon définissant la surface cible 100, ou l'usinage de la surface cible 100 peut ensuite débuter à l'étape 18.

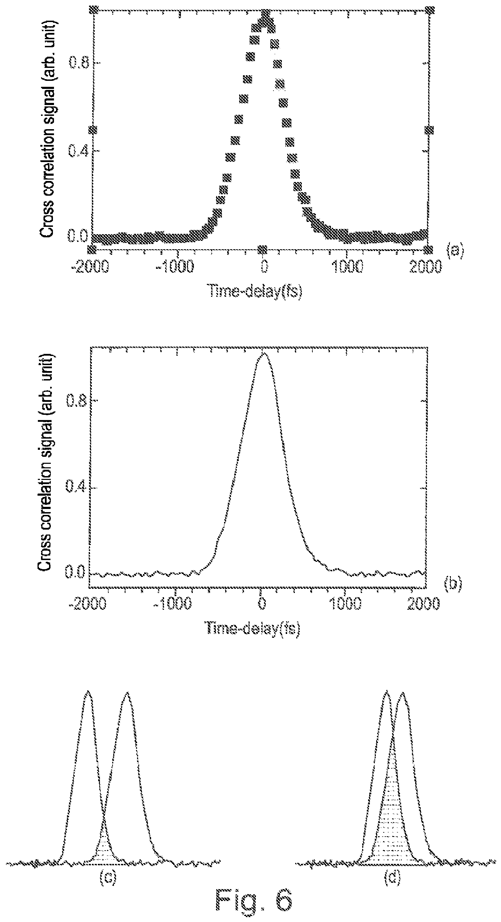

La figure 6 représente des chronogrammes de signaux obtenus en appliquant le procédé selon l'invention dans le cas d'un montage optique d'analyse du type pompe-sonde.

Le chronogramme 6(a) représente un exemple de signaux de focalisation obtenus par corrélation croisée entre le faisceau pompe réfléchi fᵣ par l'échantillon 100 et retardé par la ligne à retard 4, et un faisceau sonde de référence f_{ref}, non réfléchi par l'échantillon 100. Le chronogramme 6(b) représente une courbe lissée passant par les valeurs mesurées.

Les chronogrammes 6(c) et 6(d) représentent différents recouvrements selon le déplacement de la ligne à retard 4.

Un kit comprenant le dispositif de re-focalisation selon l'invention et un échantillon de référence pour la détermination préalable des conditions de référence peut être proposé.

L'expression « comportant un » doit être comprise comme signifiant « comportant au moins un », sauf si le contraire est spécifié.

## Revendications

1. Procédé de re-focalisation sur une surface cible (100) d'un montage optique, utilisant au moins un faisceau (fᵤ) provenant d'une source optique (2) à impulsions courtes, comportant au moins une optique de focalisation (5) du faisceau (fᵤ) sur la surface cible (100), la re-focalisation étant opérée après connaissance de conditions de référence (d₁) pour lesquelles le montage optique est considéré comme étant focalisé, procédé dans lequel :
- on détecte un signal de focalisation représentatif d'un recouvrement temporel des impulsions entre un faisceau réfléchi (fᵣ) par la surface cible (100) et un faisceau de référence non réfléchi (f_{ref}) par la surface cible (100) et issu de la source (2), l'un des faisceaux étant retardé par une ligne à retard (4, 14),
- on fait varier, à partir desdites conditions de référence, le chemin optique du faisceau sur lequel est placée la ligne à retard (4, 14) de façon à amener ledit signal de focalisation à atteindre ou dépasser un seuil prédéfini, et
- on réajuste la focalisation à partir de la connaissance de la variation de chemin optique entre les conditions de référence (d₁) et les conditions (d₂) pour lesquelles le signal de focalisation atteint ou dépasse ledit seuil prédéfini.

2. Procédé selon la revendication 1, étant appliqué à l'analyse d'un échantillon (100) définissant ladite surface cible, utilisant un faisceau sonde (fₛ) et un faisceau pompe (fₚ), dont l'un au moins provient de la source optique (2) à impulsions courtes, comportant au moins une ligne à retard (4, 14) placée sur le trajet de l'un des faisceaux, et au moins une optique de focalisation (5) des faisceaux pompe (fₚ) et sonde (fₛ) sur l'échantillon (100) à analyser, le signal de focalisation représentatif du recouvrement temporel des impulsions étant détecté entre un faisceau réfléchi (fᵣ) par l'échantillon (100), retardé par la ligne à retard (4, 14), et un faisceau de référence non réfléchi (f_{ref}) par l'échantillon (100).

3. Procédé selon la revendication 1 ou 2, dans lequel on fait varier le chemin optique du faisceau sur lequel est placée la ligne à retard (4, 14) en déplaçant la ligne à retard par rapport à la surface cible (100), ou en déplaçant la surface cible par rapport à la ligne à retard, notamment grâce à un porte-échantillon mobile sur lequel la surface cible est disposée.

4. Procédé selon l'une quelconque des revendications 1 à 3, dans lequel ledit seuil prédéfini est égal à zéro ou strictement supérieur à zéro.

5. Procédé selon l'une quelconque des revendications précédentes, dans lequel on détecte le signal de focalisation représentatif d'un recouvrement temporel des impulsions à partir de la corrélation croisée entre un faisceau réfléchi (fᵣ) par la surface cible (100), et un faisceau de référence (f_{ref}) non réfléchi par la surface cible (100) et issu de la ou de l'une des sources (2), l'un des faisceaux étant retardé par la ligne à retard (4, 14).

6. Procédé selon l'une quelconque des revendications précédentes hormis la revendication 2, dans lequel le montage optique comporte un élément séparateur (10) pour séparer le faisceau (fᵤ) provenant de source optique (2) afin de créer le faisceau réfléchi (fᵣ) par la surface cible (100) et le faisceau de référence non réfléchi (f_{ref}) par la surface cible (100).

7. Procédé selon l'une quelconque des revendications 2 à 5, dans lequel le montage optique d'analyse comporte une unique source optique (2) et un élément séparateur (3) pour séparer le faisceau (fᵢ) provenant de ladite source optique afin de créer les faisceaux pompe (fₚ) et sonde (fₛ).

8. Procédé selon l'une quelconque des revendications 2 à 5, dans lequel le montage optique d'analyse comporte deux sources optiques émettant respectivement les faisceaux pompe (fₚ) et sonde (fₛ).

9. Procédé selon l'une quelconque des revendications 2 à 8 hormis la revendication 6, dans lequel la ligne à retard (4) est placée sur le trajet du faisceau pompe (fₚ).

10. Procédé selon l'une quelconque des revendications 2 à 9 hormis la revendication 6, dans lequel le faisceau de référence non réfléchi (f_{ref}) par l'échantillon (100) est le faisceau pompe (fₚ) non retardé par la ligne à retard (4, 14), ou le faisceau sonde (fₛ) ou, dans le cas où le montage optique d'analyse comporte une seule source (2) et un élément séparateur (3), un faisceau (fᵢ) issu de la source optique capturé avant ledit élément séparateur.

11. Procédé selon l'une quelconque des revendications précédentes, dans lequel on réajuste la focalisation en déplaçant la ou les optiques de focalisation (5) par rapport à la surface cible (100), ou en déplaçant la surface cible par rapport à la ou aux optiques de focalisation, notamment grâce à un porte-échantillon mobile sur lequel la surface cible (100) est disposée.

12. Procédé selon l'une quelconque des revendications précédentes, dans lequel les conditions de référence correspondent à un état dans lequel la ou les optiques de focalisation (5) sont considérées comme étant focalisées sur une surface cible de référence, une longueur de référence (dₗ) du chemin optique entre la ligne à retard (4, 14) et la surface cible étant déterminée à partir dudit état de focalisation.

13. Dispositif de re-focalisation (1) destiné à la mise en oeuvre du procédé de re-focalisation sur une surface cible (100) d'un montage optique selon l'une quelconque des revendications précédentes, ledit montage optique utilisant au moins un faisceau (fᵤ) provenant d'une source optique (2) à impulsions courtes, comportant au moins une optique de focalisation (5) du faisceau (fᵤ) sur la surface cible (100) et une ligne à retard (4, 14),
le dispositif comportant un moyen (7, 17) de détection d'un signal de focalisation représentatif d'un recouvrement temporel des impulsions entre un faisceau réfléchi (fᵣ) par la surface cible (100), et un faisceau de référence (f_{ref}) non réfléchi par la surface cible (100) et issu de la source (2), l'un des faisceaux étant retardé par la ligne à retard (4, 14), le dispositif étant configuré pour :
- faire varier, à partir de conditions de référence pour lesquelles le montage optique était considéré comme étant focalisé, le chemin optique du faisceau sur lequel est placée la ligne à retard (4, 14) de façon à amener ledit signal de focalisation à atteindre ou dépasser un seuil prédéfini, et
- réajuster la focalisation à partir de la connaissance de la variation de chemin optique entre lesdites conditions de référence et celles pour lesquelles le signal de focalisation atteint ledit seuil prédéfini.

14. Dispositif selon la revendication précédente, étant appliqué à l'analyse d'un échantillon définissant ladite surface cible, dans lequel le montage optique d'analyse utilise un faisceau sonde (fₛ) et un faisceau pompe (fₚ), dont l'un au moins provient de la source optique (2) à impulsions courtes, comporte au moins une ligne à retard (4, 14) placée sur le trajet de l'un des faisceaux, et au moins une optique de focalisation (5) des faisceaux pompe (fₚ) et sonde (fₛ) sur l'échantillon (100) à analyser, le signal de focalisation représentatif du recouvrement temporel des impulsions étant détecté entre un faisceau réfléchi (fᵣ) par l'échantillon (100), retardé par la ligne à retard (4, 14), et un faisceau de référence non réfléchi (f_{ref}) par l'échantillon (100).

15. Ensemble destiné à la mise en oeuvre du procédé de re-focalisation d'une surface cible (100) d'un montage optique selon l'une quelconque des revendications 1 à 12, comprenant :
- le dispositif de re-focalisation (1) selon l'une quelconque des revendications 13 ou 14, comportant au moins une ligne à retard (4, 14) et au moins une optique de focalisation (5) de faisceaux sur la surface cible (100), et
- une surface cible de référence pour la détermination préalable desdites conditions de référence pour lesquelles le montage optique est considéré comme étant focalisé sur ladite surface cible de référence.

## Patentansprüche

1. Verfahren zur Refokussierung einer optischen Anordnung auf eine Zielfläche (100) unter Verwendung mindestens eines Strahls (fᵤ), der von einer optischen Quelle (2) mit kurzen Impulsen stammt, umfassend mindestens eine Optik zur Fokussierung (5) des Strahls (fᵤ) auf die Zielfläche (100), wobei die Refokussierung nach Kenntnis von Referenzbedingungen (d₁) durchgeführt wird, für die optische Anordnung als fokussiert betrachtet wird, wobei bei dem Verfahren:
- ein Fokussierungssignal erfasst wird, das für eine zeitliche Abdeckung zwischen einem von der Zielfläche (100) reflektierten Strahl (fᵣ) und einem von der Zielfläche (100) nicht reflektierten Referenzstrahl (f_{ref}) und von der Quelle (2) stammend repräsentativ ist, wobei einer der Strahlen durch eine Verzögerungsleitung (4, 14) verzögert wird,
- auf Basis der Referenzbedingungen der optische Weg des Strahls, auf dem die Verzögerungsleitung (4, 14) angeordnet ist, variiert wird, um das Fokussierungssignal dazu zu bringen, eine vordefinierte Grenze zu erreichen oder zu überschreiten, und
- die Fokussierung auf Basis der Kenntnis der optischen Wegvariation zwischen den Referenzbedingungen (d₁) und der Bedingungen (d₂), unter denen das Fokussierungssignal die vordefinierte Grenze erreicht oder überschreitet, neu eingestellt wird.

2. Verfahren nach Anspruch 1, wobei es bei der Analyse einer Probe (100), die die Zielfläche definiert, angewandt wird, unter Verwendung eines Sondenstrahls (fₛ) und eines Pumpstrahls (fₚ), von denen mindestens einer von der optischen Quelle (2) mit kurzen Impulsen stammt, umfassend mindestens eine Verzögerungsleitung (4, 14), die auf der Bahn eines der Strahlen angeordnet ist, und mindestens eine Fokussierungsoptik (5) der Pump- (fₚ) und Sondenstrahlen (fₛ) auf der zu analysierenden Probe (100), wobei das Fokussierungssignal, das für die zeitliche Abdeckung der Impulse repräsentativ ist, zwischen einem von der Probe (100) reflektierten Strahl (fᵣ), der durch die Verzögerungsleitung (4, 14) verzögert wird, und einem von der Probe (100) nicht reflektierten Referenzstrahl (f_{ref}) erfasst wird.

3. Verfahren nach Anspruch 1 oder 2, bei dem der optische Weg des Strahls, auf dem die Verzögerungsleitung (4, 14) angeordnet ist, variiert wird, wobei die Verzögerungsleitung in Bezug zur Zielfläche (100) verlagert wird, oder wobei die Zielfläche in Bezug zur Verzögerungsleitung verlagert wird, insbesondere dank eines beweglichen Probenhalters, auf dem die Zielfläche angeordnet ist.

4. Verfahren nach einem der Ansprüche 1 bis 3, bei dem die vordefinierte Grenze gleich Null oder unbedingt größer als Null ist.

5. Verfahren nach einem der vorhergehenden Ansprüche, bei dem das Fokussierungssignal, das für die zeitliche Abdeckung der Impulse repräsentativ ist, auf Basis der gekreuzten Korrelation zwischen einem von der Zielfläche (100) reflektierten Strahl (fᵣ) und einem von der Zielfläche (100) nicht reflektierten Referenzstrahl (f_{ref}) und von der oder einer der Quellen (2) stammend erfasst wird, wobei einer der Strahlen durch die Verzögerungsleitung (4, 14) verzögert wird.

6. Verfahren nach einem der vorhergehenden Ansprüche außer Anspruch 2, bei dem die optische Anordnung ein Trennelement (10) umfasst, um den von einer optischen Quelle (2) stammenden Strahl (fᵤ) zu trennen, um den von der Zielfläche (100) reflektierten Strahl (fᵣ) und den von der Zielfläche (100) nicht reflektierten Referenzstrahl (f_{ref}) zu erzeugen.

7. Verfahren nach einem der Ansprüche 2 bis 5, bei dem die optische Analyseanordnung eine einzige optische Quelle (2) und ein Trennelement (3) umfasst, um den von der optischen Quelle stammenden Strahl (fᵢ) zu trennen, um die Pump- (fₚ) und Sondenstrahlen (fₛ) zu erzeugen.

8. Verfahren nach einem der Ansprüche 2 bis 5, bei dem die optische Analyseanordnung zwei optische Quellen umfasst, die die Pump- (fₚ) bzw. Sondenstrahlen (fₛ) entsenden.

9. Verfahren nach einem der Ansprüche 2 bis 8 außer Anspruch 6, bei dem die Verzögerungsleitung (4) auf der Bahn des Pumpstrahls (fₚ) angeordnet ist.

10. Verfahren nach einem der Ansprüche 2 bis 9 außer Anspruch 6, bei dem der von der Probe (100) nicht reflektierte Referenzstrahl (f_{ref}) der von der Verzögerungsleitung (4, 14) nicht verzögerte Pumpstrahl (fₚ) oder der Sondenstrahl (fₛ) ist, oder, falls die optische Analyseanordnung eine einzige Quelle (2) und ein Trennelement (3) umfasst, ein von der optischen Quelle stammender Strahl (fᵢ) ist, der vor dem Trennelement eingefangen wird.

11. Verfahren nach einem der vorhergehenden Ansprüche, bei dem die Fokussierung neu angepasst wird, wobei die Fokussierungsoptik(en) (5) in Bezug zur Zielfläche (100) verlagert wird(werden), oder wobei die Zielfläche in Bezug zu der(n) Fokussierungsoptik(en) verlagert wird, insbesondere dank eines beweglichen Probenhalters, auf dem die Zielfläche (100) angeordnet ist.

12. Verfahren nach einem der vorhergehenden Ansprüche, bei dem die Referenzbedingungen einem Zustand entsprechen, in dem die Fokussierungsoptik(en) (5) als auf eine Referenzzielfläche fokussiert betrachtet werden, wobei eine Referenzlänge (d₁) des optischen Weges zwischen der Verzögerungsleitung (4, 14) und der Zielfläche auf Basis des Fokussierungszustands bestimmt wird.

13. Vorrichtung zur Refokussierung (1), die für den Einsatz des Verfahrens zur Refokussierung einer optischen Anordnung auf eine Zielfläche (100) nach einem der vorhergehenden Ansprüche bestimmt ist, wobei die optische Anordnung mindestens einen Strahl (fᵤ) verwendet, der von einer optischen Quelle (2) mit kurzen Impulsen stammt, umfassend mindestens eine Optik zur Fokussierung (5) des Strahls (fᵤ) auf die Zielfläche (100) und eine Verzögerungsleitung (4, 14),
wobei die Vorrichtung ein Mittel (7, 17) zur Erfassung eines Fokussierungssignals umfasst, das für eine zeitliche Abdeckung zwischen einem von der Zielfläche (100) reflektierten Strahl (fᵣ) und einem von der Zielfläche (100) nicht reflektierten Referenzstrahl (f_{ref}) und von der Quelle (2) stammend repräsentativ ist, wobei einer der Strahlen durch die Verzögerungsleitung (4, 14) verzögert wird,
wobei die Vorrichtung eingerichtet ist, um:
- auf Basis der Referenzbedingungen, für die die optische Anordnung als fokussiert betrachtet wurde, den optischen Weg des Strahls, auf dem die Verzögerungsleitung (4, 14) angeordnet ist, zu variieren, um das Fokussierungssignal dazu zu bringen, eine vordefinierte Grenze zu erreichen oder zu überschreiten, und
- die Fokussierung auf Basis der Kenntnis der optischen Wegvariation zwischen den Referenzbedingungen und jenen, unter denen das Fokussierungssignal die vordefinierte Grenze erreicht oder überschreitet, neu einzustellen.

14. Vorrichtung nach dem vorhergehenden Anspruch, wobei sie bei der Analyse einer Probe, die die Zielfläche definiert, angewandt wird, wobei die optische Analyseanordnung einen Sondenstrahl (fₛ) und einen Pumpstrahl (fₚ) verwendet, von denen mindestens einer von der optischen Quelle (2) mit kurzen Impulsen stammt, und mindestens eine Verzögerungsleitung (4, 14) umfasst, die auf der Bahn eines der Strahlen angeordnet ist, und mindestens eine Fokussierungsoptik (5) der Pump- (fₚ) und Sondenstrahlen (fₛ) auf der zu analysierenden Probe (100) umfasst, wobei das Fokussierungssignal, das für die zeitliche Abdeckung der Impulse repräsentativ ist, zwischen einem von der Probe (100) reflektierten Strahl (fᵣ), der durch die Verzögerungsleitung (4, 14) verzögert wird, und einem von der Probe (100) nicht reflektierten Referenzstrahl (f_{ref}) erfasst wird.

15. Anordnung, die für den Einsatz des Verfahrens zur Refokussierung einer Zielfläche (100) einer optischen Anordnung nach einem der Ansprüche 1 bis 12 bestimmt ist, umfassend:
- die Refokussierungsvorrichtung (1) nach einem der Ansprüche 13 oder 14, umfassend mindestens eine Verzögerungsleitung (4, 14) und mindestens eine Optik (5) zur Fokussierung von Strahlen auf die Zielfläche (100), und
- eine Referenzzielfläche für die vorherige Bestimmung der Referenzbedingungen, unter denen die optische Anordnung als auf die Referenzzielfläche fokussiert betrachtet wird.

## Claims

1. A method for refocusing an optical setup on a target surface (100), using at least one beam (fᵤ) originating from a short-pulse optical source (2), comprising at least one optic (5) for focusing the beam (fᵤ) on the target surface (100), the refocusing being applied after knowing reference conditions (d₁) for which the optical setup is considered to be focused, method in which:
- a focusing signal is detected that is representative of a temporal overlapping of the pulses bewteen a beam reflected (fᵣ) by the target surface (100) and a reference beam not reflected (f_{ref}) by the target surface (100) and deriving from the source (2), one of the beams being delayed by a delay line (4, 14),
- based on said reference conditions, the optical path of the beam on which the delay line (4, 14) is placed is made to vary so as to cause said focusing signal to reach or exceed a predefined threshold, and
- the focusing is readjusted on the basis of the knowledge of the variation of optical path between the reference conditions (d₁) and the conditions (d₂) for which the focusing signal reaches or exceeds said predefined threshold.

2. The method as claimed in claim 1, being applied to the analysis of a sample (100) defining said target surface, using a probe beam (fₛ) and a pump beam (fₚ), of which at least one originates from the short-pulse optical source (2), comprising at least one delay line (4, 14) placed on the trajectory of one of the beams, and at least one optic for focusing (5) the pump (fₚ) and probe (fₛ) beams on the sample (100) to be analyzed, the focusing signal representative of the temporal overlapping of the pulses being detected between a beam reflected (fᵣ) by the sample (100), delayed by the delay line (4, 14), and a reference beam not reflected (f_{ref}) by the sample (100).

3. The method as claimed in claim 1 or 2, in which the optical path of the beam on which the delay line (4, 14) is placed is varied by moving the delay line relative to the target surface (100), or by moving the target surface relative to the delay line, notably using a mobile sample-holder on which the target surface is arranged.

4. The method as claimed in any one of claims 1 to 3, in which said predefined threshold is equal to zero or strictly greater than zero.

5. The method as claimed in any one of the preceding claims, in which the focusing signal representative of a temporal overlapping of the pulses is detected on the basis of the cross-correlation between a beam reflected (fᵣ) by the target surface (100), and a reference beam (f_{ref}) not reflected by the target surface (100) and deriving from the or one of the sources (2), one of the beams being delayed by the delay line (4, 14).

6. The method as claimed in any one of the preceding claims excluding claim 2, in which the optical setup comprises a splitter element (10) for splitting the beam (fᵤ) originating from the optical source (2) in order to create the beam reflected (fᵣ) by the target surface (100) and the reference beam not reflected (f_{ref}) by the target surface (100).

7. The method as claimed in any one of claims 2 to 5, in which the optical analysis setup comprises a single optical source (2) and a splitter element (3) for splitting the beam (fᵢ) originating from said optical source in order to create the pump (fₚ) and probe (fₛ) beams.

8. The method as claimed in any one of claims 2 to 5, in which the optical analysis setup comprises two optical sources respectively emitting the pump (fₚ) and probe (fₛ) beams.

9. The method as claimed in any one of claims 2 to 8 excluding claim 6, in which the delay line (4) is placed on the trajectory of the pump beam (fₚ).

10. The method as claimed in any one of claims 2 to 9 excluding claim 6, in which the reference beam not reflected (f_{ref}) by the sample (100) is the pump beam (fₚ) not delayed by the delay line (4, 14), or the probe beam (fₛ) or, in the case where the optical analysis setup comprises a single source (2) and a splitter element (3), a beam (fᵢ) deriving from the optical source captured before said splitter element.

11. The method as claimed in any one of the preceding claims, in which the focusing is readjusted by moving the focusing optic or optics (5) relative to the target surface (100), or by moving the target surface relative to the focusing optic or optics, notably using a mobile sample-holder on which the target surface (100) is arranged.

12. The method as claimed in any one of the preceding claims, in which the reference conditions correspond to a state in which the focusing optic or optics (5) are considered to be focused on a reference target surface, a reference length (d₁) of the optical path between the delay line (4, 14) and the target surface being determined from said focusing state.

13. A refocusing device (1) intended to implement the method for refocusing an optical setup on a target surface (100) as claimed in any one of the preceding claims, said optical setup using at least one beam (fᵤ) originating from a short-pulse optical source (2), comprising at least one optic (5) for focusing the beam (fᵤ) on the target surface (100) and a delay line (4, 14),
the device comprising a means (7, 17) for detecting a focusing signal representative of a temporal overlapping of the pulses between a beam reflected (fᵣ) by the target surface (100), and a reference beam (f_{ref}) not reflected by the target surface (100) and deriving from the source (2), one of the beams being delayed by the delay line (4, 14),
the device being configured to:
- vary, based on reference conditions for which the optical setup was considered to be focused, the optical path of the beam on which the delay line (4, 14) is placed so as to cause said focusing signal to reach or exceed a predefined threshold, and
- readjust the focusing based on the knowledge of the variation of optical path between said reference conditions and those for which the focusing signal reaches said predefined threshold.

14. The device as claimed in the preceding claim, being applied to the analysis of a sample defining said target surface, in which the optical analysis setup uses a probe beam (fₛ) and a pump beam (fₚ), of which at least one originates from the short-pulse optical source (2), comprises at least one delay line (4, 14) placed on the trajectory of one of the beams, and at least one optic (5) for focusing the pump (fₚ) and probe (fₛ) beams on the sample (100) to be analyzed, the focusing signal representative of the temporal overlapping of the pulses being detected between a beam reflected (fᵣ) by the sample (100), delayed by the delay line (4, 14), and a reference beam not reflected (f_{ref}) by the sample (100).

15. An assembly intended to implement the method for refocusing a target surface (100) of an optical setup as claimed in any one of claims 1 to 12, comprising:
- the refocusing device (1) as claimed in any one of claims 13 or 14, comprising at least one delay line (4, 14) and at least one optic (5) for focusing beams on the target surface (100), and
- a reference target surface for the prior determination of said reference conditions for which the optical setup is considered to be focused on said reference target surface.
